# EUROPEAN PATENT SPECIFICATION

(11) **EP 1 815 816 B1**
(45) Date of publication and mention of the grant of the patent: **15.04.2009**
(21) Application number: 07101593.7
(22) Date of filing: 01.02.2007
(51) Int. Cl.: A61C 1/00, A61C 19/04

(54) **Auxiliary apparatus for dental treatments**
Zusatzgerät zur zahnärztlichen Behandlung
Appareil auxiliaire pour traitements dentaires

(30) Priority: 03.02.2006 IT BO20060064
(43) Date of publication of application: 08.08.2007
(73) Proprietor: CASTELLINI S.p.A., I-40013 Castel Maggiore (Bologna) (IT)
(72) Inventor: Castellini, Franco, 40124 Bologna (IT)
(74) Representative: Lanzoni, Luciano

(56) References cited:
- US-B1- 6 547 565
- US-B1- 6 591 698

## Description

This invention relates to an auxiliary apparatus for dental treatments where the operating parameters of the handpieces applied can be displayed.

It is well known that dental surgeries use auxiliary apparatus (also referred to as "stand-alone" apparatus because it is separate from the traditional dental unit) to administer dental treatment on patients using specific handpieces that may supplement or be used instead of the handpieces and equipment located on the dental unit.

These specific treatments, for example involving endodontic or implant operations (besides dental hygiene and/or whitening treatments) are performed using the auxiliary apparatus, which essentially comprises:
- a main body constituting the power unit that drives the handpieces in turn connected to the unit through a tube;
- means for activating the handpiece and adjusting its operating parameters, these means being located on a surface of the main body and being controlled by
- a microprocessor unit for controlling the main and auxiliary functions of the handpiece applied to the apparatus.

The microprocessor may, in complex configurations, be programmed and set for a plurality of handpieces and treatments according to operating needs.

One of the needs which current apparatus of this kind is unable to satisfy, however, is that of monitoring the actual "operating torque" or work of the handpieces during use (for example, handpiece burs for implant applications or dental filing tools for endodontic operations) allowing the dental surgeon to view the physiological and structural parameters of the parts concerned immediately: indicating, for example, how compact a tooth being treated is, whether the tool on the handpiece is working on soft tissue, etc for example see document US 6 547 565 B1.

These parameters are very important because they enable the dental surgeon to make an immediate decision as to the treatment to apply next or the implant to use on the patient.

At present, data regarding operating torque actually applied to a handpiece can be recorded on this stand-alone apparatus to which the handpieces used for these treatments can be connected.

In this case, the stand-alone apparatus has a unit that records the torque used during treatment and saves the information to a smart card. The information recorded can then be transferred to another unit or PC capable of displaying or printing it.

The information obtained in this way, however, is used for statistical purposes only, since the treatment and subsequent therapies have already been applied on the basis of what the surgeon saw at the time of the treatment and his/her own experience.

In view of the above, as described in industrial invention patent application BO2005A000439 (Publication number EP 1 738 712), the Applicant designed an apparatus capable of immediately displaying handpiece work data.

The stand-alone apparatus disclosed in that application comprises a data display screen connected to the computerized control unit through an interface unit.

The interface unit receives from the computerized control unit an input signal that is a function of the handpiece working torque value which is interpolated and displayed on the screen as a graph of torque over time.

The solution disclosed in that patent application leaves room for improvement, however.

The information relating to the working torque, although displayed in real time, cannot be used immediately by the dental surgeon and must be further processed to provide details regarding, for example, the tool that should be used to continue the treatment in progress.

In this context, the main technical purpose of the present invention is to propose an apparatus with an enhanced data displaying capability.

The invention therefore has for an aim to provide an apparatus capable of giving the surgeon ready information useful for the work being done on the patient, thus simplifying and speeding up the dental surgeon's work.

In accordance with the invention, this aim is achieved by an auxiliary apparatus, especially an auxiliary apparatus for dental treatments, having the technical characteristics described in one or more of the appended claims.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the invention , and in which:
- Figure 1 shows an auxiliary apparatus for dental treatments according to the present invention in a schematic perspective view with some parts cut away to better illustrate others;
- Figure 2 is a diagram illustrating some of the parts of the apparatus of Figure 1.

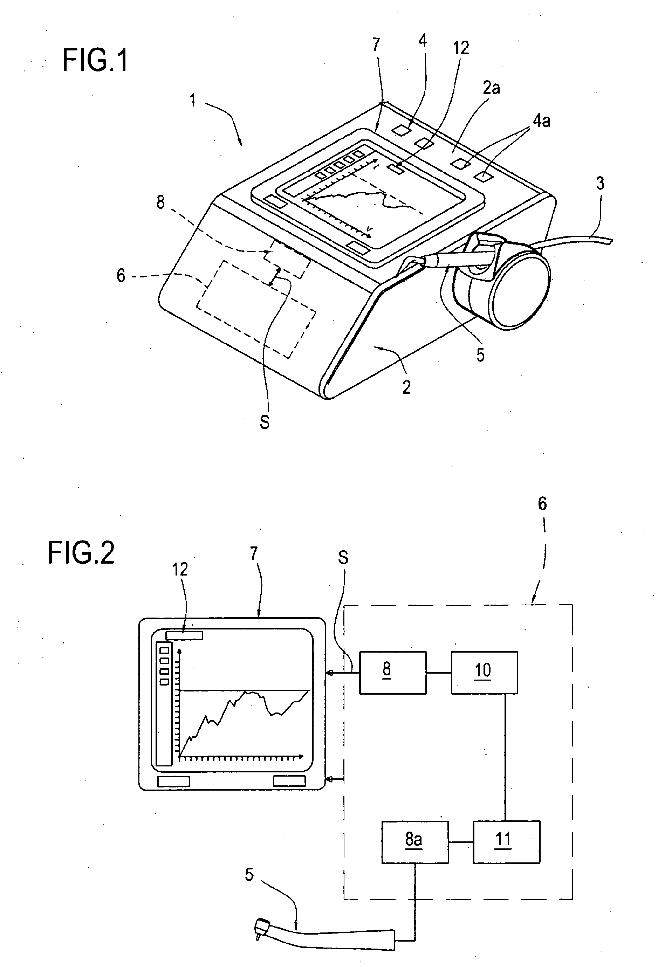

With reference to the accompanying drawings, and in particular Figure 1, the auxiliary apparatus for dental treatments according to the invention, is labelled 1 in its entirety,

Insofar as is relevant to the present invention, however, the apparatus 1 essentially comprises:
- a main body 2 (for example, shaped substantially like a parallelepiped, but without thereby restricting the scope of the invention) constituting a power unit that drives handpieces 5 used for traditional conservative, implant and/or endodontic operations and in turn connected to the unit 2 through a connecting tube 3 (equipped with an appropriate end fitting);
- means 4 for activating the handpiece 5 and adjusting the operating parameters of the handpiece 5, said means (for example pushbuttons 4a) being located on a surface 2a of the main body 2 and being controlled by
- a microprocessor unit 6 (illustrated as a block in the drawings) for controlling the main and auxiliary functions of the handpiece 5 applied to the unit 2.

Depending on the type of treatment, the handpieces applicable to the apparatus may be of several different kinds, such as, for example, handpiece burs for implant surgery or dental filing tools for endodontic surgery.

Obviously, the apparatus according to the invention may include additional auxiliary components (for example, a bag of physiological saline connected directly to the handpiece and providing a separate fluid supply during treatment) without thereby restricting the scope of the invention.

As shown in Figure 1, the apparatus 1 also comprises (again see patent application BOA2005000439) :
- viewing means 7 (a display unit) controlled by the computerized control unit 6 through an interface 8 for transmitting and conditioning a signal S that carries said data, which relate to functional parameters of the handpiece 5 used.

Further, the computerized control unit 6 in the apparatus 1, as illustrated in Figure 2, comprises an interface 8 for transmitting the data to the viewing means 7.

The computerized unit 6 comprises means 8a for interpolating the data in order to provide additional information relating to the operation of the handpiece 5.

Preferably, the data transmitted and interpolated comprise the rotation speed of the handpiece 5, the torque generated by the handpiece 5 and the length of time the handpiece 5 is used for during a given operation (displayed in real time on the display unit 7).

Preferably, in this case, the operation considered is one in which a pilot bur is used to prepare a patient's bone for subsequent operations.

The interpolating means 8a are designed to calculate an estimate of the work done by the handpiece 5, based on the rotation speed and torque of the handpiece 5 and on the length of time it has been used for.

The apparatus 1 also comprises, preferably in the computerized control unit 6, corrective means 11 for weighting the interpolated data according to the specific user of the handpiece.

That is because the work actually done by the handpiece 5 is affected by the pressure applied by the surgeon and is not only a function of the physical quantities measured.

Thus, in calculating the work done by the handpiece 5, the corrective means 11 introduce a corrective index as a function of the pressure applied by the surgeon using the handpiece 5 on the patient.

The apparatus 1 also comprises comparator means 10 for estimating an item of information relating to the patient treated.

The comparator means 10 compare the work done by the handpiece 5 with a scale of reference values relating, in particular, to the drilling of certain materials.

In this way, the comparator means 10 can provide an indication of the hardness of the bone being treated as a function of the work done to cut or drill it.

Preferably, this indication is expressed as a percentage of the maximum hardness sampled experimentally.

Preferably, the display unit 7 has a viewing portion 12 used in particular for displaying the estimated indication.

More specifically, the portion 12 of the viewing means 7 is used to display the hardness of the patient's bone, expressed preferably as a percentage.

It will be appreciated that an apparatus made in this way achieves the aforementioned aims by providing an immediate indication of the hardness of the patient's bone as soon as the surgeon completes a preliminary drilling operation on the bone, thereby facilitating subsequent work.

During the operation, a trace of work over time is provided and, upon completion of work with the pilot bur, using the indication of bone hardness, the surgeon is in a better position to decide whether it is necessary to continue with another bur or how many burs should be used to proceed.

It will be understood that the invention described may be useful in many industrial applications and may be modified and adapted in several ways without thereby departing from the scope of the inventive concept.

## Claims

1. An auxiliary apparatus for dental treatments, the apparatus (1) being of the type comprising at least:
- a main body (2) constituting a power unit that drives handpieces (5) used for traditional conservative, implant and/or endodontic operations and in turn connected to the unit (2) through a connecting tube (3);
- handpiece (5) activation and adjustment means (4) located on a surface (2a) of the main body (2) and being controlled by
- a microprocessor unit (6) for controlling the main and auxiliary functions of the handpiece (5) applied to the unit (2);
- viewing means (7) for displaying data relating to functional parameters of the handpiece (5) being used, said viewing means (7) being connected to the microprocessor control unit (6) through an interface (8) for transmitting and conditioning a signal that carries said data;
- means (8a) being provided for interpolating the data, in particular for obtaining the data in a displayable form in real time; means (10) for comparing the data in order to provide an estimated information item (12) relating to the patient being treated, said interpolating means (8a) being designed to calculate an estimate of the work done by the handpiece (5), the information item (12) being preferably defined by said work; the apparatus (1) being **characterised in that** it further comprises corrective means (11) for weighting the estimated work (12) by introducing a corrective index as a function of the pressure applied by the surgeon using the handpiece (5) on the patient.

2. The apparatus according to claim 1, **characterised in that** the information item (12) relates to the hardness of the bone of the patient being treated with the handpiece (5).

3. The apparatus according to claim 2, **characterised in that** the hardness (12) is expressed as a percentage of a maximum value.

4. the apparatus according to claims 1 to 3, **characterised in that** the comparator means (10) are designed to compare the information item (12) with a plurality of sampled reference values.

5. The apparatus according to claims 1 to 4, **characterised in that** the viewing means (7) comprise a portion used to display the information item (12) substantially in real time.

6. The apparatus according to claim 1, **characterised in that** the data used to estimate the information item (12) comprise at least the rotation speed of the handpiece (5), the torque generated by the handpiece (5) and the length of time the handpiece (5) is used for.

## Patentansprüche

1. Zusatzgerät zur zahnärztlichen Behandlung, wobei das Gerät (1) von der Art ist, die zumindest Folgendes beinhaltet:
- ein Hauptgehäuse (2), das eine Versorgungseinheit zum Antrieb von Handstücken (5) bildet, die für zahnärztliche Behandlungen herkömmlicher konservativer Art, für Implantate und/oder für die endodontische Chirurgie verwendet werden und ihrerseits mit der Einheit (2) über einen Anschlussschlauch (3) verbunden sind;
- Mittel (4) zur Aktivierung und Einstellung der Handstücke (5), die auf einer Fläche (2a) des Hauptgehäuses (2) angeordnet sind und gesteuert werden über
- eine Mikroprozessoreinheit (6) zur Steuerung der Haupt- und Zusatzfunktionen des Handstücks (5), das mit der Einheit (2) verbunden ist;
- Anzeigemittel (7) zur Anzeige von Daten, die auf Funktionsparameter des verwendeten Handstücks (5) bezogen sind, wobei die Anzeigemittel (7) über eine Schnittstelle (8) zur Übertragung und Aufbereitung eines Signals, das die genannten Daten trägt, mit der Mikroprozessor-Steuereinheit (6) verbunden sind;
- Mittel (8a) zum Interpolieren der bereitgestellten Daten, insbesondere um die Daten in Echtzeit in anzeigbarer Form zu erhalten;
- Mittel (10) zum Vergleichen der Daten, um eine auf den behandelten Patienten bezogene geschätzte Informationseinheit (12) bereitzustellen; wobei die Interpolationsmittel (8a) dafür ausgelegt sind, eine Schätzung der von dem Handstück (5) geleisteten Arbeit zu berechnen, wobei die Informationseinheit (12) vorzugsweise durch die genannte Arbeit definiert ist; wobei das Gerät (1) **dadurch gekennzeichnet ist, dass** es ferner Korrekturmittel (11) beinhaltet, die zur Gewichtung der geschätzten Arbeit (12) durch Einführung eines Korrekturindexes dienen, der eine Funktion des vom Zahnarzt beim Einsatz des Handstückes (5) zur Behandlung des Patienten ausgeübten Drucks ist.

2. Gerät nach Anspruch 1, **dadurch gekennzeichnet, dass** die Informationseinheit (12) auf die Härte des Knochens des mit dem Handstück (5) behandelten Patienten bezogen ist.

3. Gerät nach Anspruch 2, **dadurch gekennzeichnet, dass** die Härte (12) als Prozentanteil eines Höchstwertes ausgedrückt wird.

4. Gerät nach dem Ansprüchen 1 bis 3, **dadurch gekennzeichnet, dass** die Komparatormittel (10) dafür ausgelegt sind, die Informationseinheit (12) mit mehreren in Proben erfassten Referenzwerten zu vergleichen.

5. Gerät nach dem Ansprüchen 1 bis 4, **dadurch gekennzeichnet, dass** die Anzeigemittel (7) einen Abschnitt beinhalten, der zur Anzeige der Informationseinheit (12) im Wesentlichen in Echtzeit dient.

6. Gerät nach Anspruch 1, **dadurch gekennzeichnet, dass** die zur Bewertung der Informationseinheit (12) verwendeten Daten zumindest die Drehzahl des Handstücks (5), das vom Handstück (5) erzeugte Drehmoment und die Nutzungsdauer des Handstücks (5) beinhalten.

## Revendications

1. Un appareil auxiliaire pour traitements dentaires, tel appareil (1) étant du type comprenant au moins :
- un corps principal (2) constituant une unité d'alimentation pour la motorisation de pièces à main (5) utilisées pour des opérations conservatrices traditionnelles, des implants et/ou des opérations endodontiques et reliées, tour à tour, à l'unité (2) par l'intermédiaire d'un cordon (3) de branchement ;
- des moyens (4) d'activation et de réglage de la pièce à main (5), situés sur une surface (2a) du corps principal (2) et asservis à
- une unité (6) à microprocesseur servant à commander les fonctions principales et auxiliaires de la pièce à main (5) appliquée à l'unité (2) ;
- des moyens de visualisation (7) servant à afficher des données relatives à des paramètres fonctionnels de la pièce à main (5) en cours d'utilisation, lesdits moyens de visualisation (7) étant reliés à l'unité de commande (6) à microprocesseur par l'intermédiaire d'une interface (8) servant à transmettre et à conditionner un signal qui porte lesdites données ;
- des moyens (8a) étant prévus pour l'interpolation des données, en particulier pour obtenir lesdites données sous une forme visualisable en temps réel ; des moyens (10) de comparaison des données afin de fournir un élément d'information estimé (12) relatif au patient traité, lesdits moyens d'interpolation (8a) étant destinés à calculer une estimation du travail effectué par la pièce à main (5), l'élément d'information (12) étant de préférence défini par ledit travail ; l'appareil (1) étant **caractérisé en ce qu'**il comprend en outre des moyens de correction (11) destinés à pondérer le travail estimé (12) en introduisant un indice de correction qui est fonction de la pression exercée sur le patient par le chirurgien qui utilise la pièce à main (5).

2. L'appareil selon la revendication 1, **caractérisé en ce que** l'élément d'information (12) concerne la dureté de l'os du patient traité avec la pièce à main (5).

3. L'appareil selon la revendication 2, **caractérisé en ce que** la dureté (12) est exprimée comme un pourcentage d'une valeur maximum.

4. L'appareil selon les revendications de 1 à 3, **caractérisé en ce que** les moyens comparateurs (10) sont destinés à comparer l'élément d'information (12) avec une pluralité de valeurs de référence échantillonnées.

5. L'appareil selon les revendications de 1 à 4, **caractérisé en ce que** les moyens de visualisation (7) comprennent une partie utilisée pour afficher l'élément d'information (12) essentiellement en temps réel.

6. L'appareil selon la revendication 1, **caractérisé en ce que** les données utilisées pour estimer l'élément d'information (12) comprennent au moins la vitesse de rotation de la pièce à main (5), le couple généré par la pièce à main (5) et le temps d'utilisation de cette même pièce à main (5).
